# FASCICULE DE BREVET EUROPEEN

(11) **EP 3 222 467 B1**
(45) Date de publication et mention de la délivrance du brevet: **05.04.2023**
(21) Numéro de dépôt: 17161175.9
(22) Date de dépôt: 15.03.2017
(51) Int. Cl.: B60Q 3/80, B60K 35/00, B60K 37/06

(54) **DISPOSITIF ET PROCEDE DE COMMANDE A RECONNAISSANCE GESTUELLE ET OPTIONNELLEMENT VOCALE POUR L'ECLAIRAGE INTERIEUR D'UN VEHICULE**
VORRICHTUNG UND VERFAHREN ZUR STEUERUNG DER INNENBELEUCHTUNG EINES FAHRZEUGS ÜBER GESTENERKENNUNG UND OPTIONAL SPRACHERKENNUNG
DEVICE AND METHOD FOR CONTROLLING THE INTERIOR LIGHTING OF A VEHICLE WITH GESTURE RECOGNITION AND OPTIONALLY VOICE RECOGNITION

(30) Priorité: 21.03.2016 FR 1652417
(43) Date de publication de la demande: 27.09.2017
(73) Titulaire: Valeo Vision, 93012 Bobigny Cedex (FR)
(72) Inventeur: FLEURENCE, Thierry, 57685 AUGNY (FR); KONIEC, Aymeric, 94350 Villiers Sur Marne (FR)
(74) Mandataire: Valeo Visibility

(56) Documents cités:
- EP-A1- 2 746 805
- EP-A2- 2 977 264
- WO-A1-2013/174580
- US-A1- 2013 088 147
- US-A1- 2014 197 757

## Description

La présente invention concerne un dispositif et procédé de commande à reconnaissance gestuelle et optionnellement vocale pour l'éclairage intérieur d'un véhicule au sein duquel la communication entre les éléments peut être réalisée par l'intermédiaire d'un réseau multiplexé.

L'électronique est de plus en plus présente dans les véhicules automobiles, et de plus en plus sophistiquée. L'électronique est ainsi utilisé désormais comme support de la plupart des fonctions du véhicule, comme dans un système de gestion moteur, un système de sécurité active et passive (système antiblocage ABS, programme de stabilité électronique ESP, aide au freinage d'urgence AFU, airbags, ceinture, radars de recul, antivol) ou encore un système de confort (conditionnement de l'air, verrouillage, ordinateur de bord, navigation).

L'électronique permet ainsi le développement de véhicules autonomes et communicants dans lesquels il est prévu un échange d'informations entre l'occupant et le véhicule par l'utilisation d'interfaces tactiles ou vocales. Certains véhicules peuvent prévoir des systèmes de reconnaissance gestuelle pour des applications de sécurité active du véhicule comme le suivi de vigilance du conducteur. Ces systèmes sont aptes à détecter et analyser des mouvements de la tête, du visage et des yeux du conducteur tels que, par exemple, l'ouverture des paupières, la position des pupilles, la direction du regard, la position et de l'inclinaison de la tête. Le système, constitué d'une unité de détection, d'une unité de calcul et d'un logiciel, est alors apte à déterminer le niveau de vigilance et de distraction ou l'état de somnolence du conducteur et peut, en conséquence, transmettre une alerte d'endormissement ou de distraction en temps réel.

Le processus associé à un tel système de reconnaissance gestuelle comporte au moins une étape de détection et de collecte de données, une étape de comparaison des informations obtenues à des données de référence puis une étape de commande et/ou de contrôle de fonctions de mise en sécurité du véhicule. En réponse à une perte de vigilance ou à un détournement de l'attention du conducteur, les systèmes embarqués ont capacité à intervenir sur le contrôle du véhicule en proposant, par exemple, une aide au maintien de trajectoire, un freinage automatique en pleine puissance, une régulation de la vitesse ou une assistance au pilotage.

L'accroissement des fonctions électroniques des systèmes de gestion moteur, de sécurité et de confort précédemment cités, a pour conséquence l'augmentation du nombre de calculateurs, de capteurs et de faisceaux de câbles électriques. On connaît dans ce contexte l'utilisation de réseau multiplexé qui permet de limiter le nombre de composants, l'encombrement des câblages et les coûts associés. Un tel réseau multiplexé consiste à faire circuler plusieurs informations entre divers calculateurs sur un seul canal de transmission, également nommé bus de données. Ces réseaux multiplexés sont connus sous les appellations anglaises « Controller Area Network » ou CAN, « Vehicle Area Network » ou VAN et « Local Interconnect Network » ou LIN.

Dans ce double contexte de reconnaissance de commande du conducteur et de multiplication des composants électroniques dans le véhicule, l'invention a pour objectif de proposer un dispositif apte à détecter, analyser et à prioriser une pluralité de commandes à reconnaissance gestuelle et optionnellement vocale d'éclairage intérieur au sein duquel la communication entre les éléments, en particulier la transmission des instructions aux modules d'éclairage, peut être réalisée via un réseau multiplexé. Le dispositif selon l'invention renforce la sécurité des occupants du véhicule en donnant la priorité aux commandes exécutées par le conducteur et en ne perturbant pas la vigilance de celui-ci qui reste concentré sur la trajectoire du véhicule. Le confort et le bien-être des occupants sont aussi améliorés.

Il est connu du document EP 2 746 805 A1 un dispositif de commande d'au moins deux modules d'éclairage distincts, dans lequel chaque module d'éclairage est associé à un capteur à ultrasons permettant de détecter une commande gestuelle exécutée par un occupant.

L'invention a pour objet un dispositif de commande d'éclairage intérieur d'un véhicule automobile comprenant les caractéristiques de la revendication 1.

On distingue les sources lumineuses des modules d'éclairage intérieur en ce qu'elles sont configurées pour émettre un faisceau lumineux particulier les unes par rapport aux autres, ou une partie d'un faisceau lumineux. Notamment, ces sources lumineuses peuvent consister en une ou plusieurs sources disposées dans les modules d'éclairage distincts, ou bien elles peuvent être formées par une diode électroluminescente de type RGB, à savoir trois puces rouge, vert, bleue. On peut également prévoir, sans que cette liste soit exhaustive, une matrice de diodes électroluminescentes pour la réalisation d'un éclairage sélectif.

Les moyens de détection sont configurés pour détecter une pluralité de commandes gestuelles, et optionnellement vocales, exécutées par au moins un occupant du véhicule dans une des zones spécifiques de l'habitacle ciblées par les moyens de détection.

Selon une caractéristique de l'invention, les commandes d'éclairage intérieur sont des commandes gestuelles constituées d'une pluralité de gestes formant une séquence gestuelle déterminée. Par séquence gestuelle on entend une succession de gestes définis par le mouvement de tout ou partie du corps d'au moins un occupant, de préférence d'un membre supérieur d'un occupant, de préférence du conducteur, chaque membre supérieur étant constitué de trois segments : bras, avant-bras et main. On détecte une séquence gestuelle dès lors qu'à intervalles réguliers, avantageusement très courts, on enregistre une position différente de la partie du corps détectée en mouvement.

Une séquence gestuelle est principalement définie par une trajectoire exécutée dans une zone de détection active de l'habitacle, selon une orientation verticale, horizontale, ou diagonale, dans un sens ou dans l'autre.

L'orientation de la séquence de gestes, c'est-à-dire la direction et le sens que l'on peut déterminer en mettant bout à bout l'ensemble des positions de la partie du corps détectée, permet de déterminer un allumage ou une extinction d'une source lumineuse et/ou une orientation correspondante de tout ou partie du module d'éclairage pour déplacer en conséquence le faisceau.

La vitesse d'exécution de la séquence gestuelle peut également être prise en compte. On comprend qu'en fonction de la quantité de modules d'éclairage à activer et de leurs positionnements dans l'habitacle, de nombreuses combinaisons de gestes associées à des zones de détection précises peuvent être crées de manière à constituer un langage gestuel fonctionnel.

De même, on entend par zone de détection active une zone de l'habitacle pouvant être aussi bien définie par une ou plusieurs surface(s) plane(s), en deux dimensions (2D) que par un ou plusieurs volume(s) en trois dimensions (3D). La zone de détection active peut couvrir de façon large l'habitacle, en étant centré sur l'axe médian de l'habitacle, ou bien pour améliorer la définition des images prises dans la zone, être ciblée sur une partie de l'habitacle dans laquelle un occupant a été détecté, et notamment sur la partie de l'habitacle associée au conducteur. De préférence, les moyens de détection de commande sont ciblés sur trois zones spécifiques distinctes : la zone conducteur, la zone passager avant, la zone passagers arrière.

Les moyens de détection peuvent notamment comporter des moyens d'acquisition, depuis un réseau, de données transportant les commandes gestuelles et optionnellement vocales. Le réseau peut consister en un réseau embarqué sur le véhicule, aussi bien un réseau sans fil par exemple de type bluetooth, WiFi, Lifi, qu'un réseau filaire de type CAN ou LIN, ou bien il peut consister en un réseau sans fil externe au véhicule.

Plus particulièrement, on pourra prévoir que
- les moyens de détection sont constitués d'une pluralité de modules de détection de commandes, qui peuvent être distincts les uns des autres tant par leur fonctionnement que par leur localisation dans des zones spécifiques ciblées de l'habitacle, chaque module étant configuré pour au moins détecter une commande d'éclairage intérieur exécutée par au moins un occupant du véhicule dans au moins une desdites zones spécifiques, analyser cette commande et transmettre des données représentatives de ladite commande,
- les moyens de traitement et d'analyse sont formés par une unité de commande électronique connue sous l'appellation ECU, de l'anglais « Electronic Control Unit », reliée auxdits modules de détection de commande et configurée pour recevoir, traiter et analyser une pluralité de données représentatives d'une pluralité de commandes, et transmettre au moins une instruction résultante à au moins un module d'éclairage, étant entendu que cette instruction pourrait consister en une instruction d'allumage et/ou d'extinction et/ou de variation de l'intensité lumineuse et/ou d'orientation d'un faisceau émis par le au moins un module d'éclairage.

Plus particulièrement, le dispositif de commande pourra comporter au moins:
- des moyens de communication amont, configurés pour faire circuler des données représentatives d'au moins une commande d'éclairage intérieur transmises par au moins un module de détection vers l'unité de commande électronique ECU, lesdits moyens de communication pouvant constituer un réseau sans fil, de préférence de type Bluetooth, un réseau filaire ou un réseau multiplexé,
- et des moyens de communication aval, configurés pour faire circuler au moins une instruction en sortie de l'unité de commande électronique ECU vers au moins une source lumineuse, lesdits moyens de communication constituant un réseau multiplexé, de préférence de type CAN et/ou LIN.

De façon additionnelle à ce qui précède, l'unité de commande électronique est configurée pour fusionner et synthétiser les données représentatives d'une pluralité de commandes en une ou plusieurs instructions résultantes. Et elle pourrait en outre configurée pour comparer les données représentatives d'une pluralité de commandes avec des données de référence et déterminer si des conditions de déclenchement d'une fonction d'éclairage sont atteintes.

L'unité de commande électronique priorise les données en provenance des différents modules de détection, et pour établir une ou plusieurs instructions résultantes sur la base d'une sélection de ces données, afin de privilégier, pour des raisons de sécurité, la commande exécutée par le conducteur.

Les sources lumineuses pour l'éclairage intérieur du véhicule peuvent être configurées pour assurer un éclairage fonctionnel et/ou un éclairage d'ambiance et/ou un éclairage pour la projection d'informations.

Par éclairage fonctionnel, on entend un éclairage améliorant la visibilité de zones spécifiques de l'habitacle du véhicule. A cet effet, on pourra prévoir au moins une source lumineuse, notamment, constituée d'au moins une diode électroluminescente LED, laquelle peut être logée, par exemple, dans le bloc plafonnier pour un éclairage directionnel de type liseuse.

Par éclairage d'ambiance, on entend un éclairage de plus faible intensité permettant de mettre en valeur des détails de l'habitacle, par exemple le contour du tableau de bord et des portes, ou de décorer des zones spécifiques telles que le plafond du véhicule. A cet effet, on pourra prévoir au moins une source lumineuse formée d'une matrice de diodes électroluminescentes activables sélectivement et logée, par exemple, dans le bloc plafonnier.

Par éclairage pour la projection d'informations, on entend la projection d'un faisceau lumineux sur un support neutre par l'intermédiaire d'une source lumineuse indépendante du support. A titre d'exemple, un projecteur peut, à l'aide de diodes, projeter sur le pare-brise des informations relatives à la vitesse et à la navigation du véhicule (niveau du carburant, trafic, alertes des défauts mécaniques).

Les moyens de détection sont constitués d'au moins un module de détection d'une commande d'éclairage intérieur apte à détecter, capturer et enregistrer toute commande d'éclairage intérieur, exécutée par au moins un occupant du véhicule dans au moins une zone spécifique de l'habitacle, analyser cette commande et transmettre des données représentatives de ladite commande.

Chaque module de détection peut être configuré pour enregistrer une pluralité de commandes dont la séquence de réalisation forme la commande d'éclairage intérieur. L'enregistrement de données permet ainsi de reconstituer la séquence d'images successives formant la commande, et cela permet en outre de faciliter la gestion d'une base de données de commandes gestuelles de référence servant de base de comparaison pour déterminer si des conditions de déclenchement de la commande d'éclairage sont réalisées.

Selon une caractéristique avantageuse de l'invention, le module de détection et le cas échéant d'enregistrement de commande à séquence gestuelle et optionnellement vocale du dispositif de commande selon l'invention est orienté vers au moins une zone de détection active de l'habitacle du véhicule et est constitué d'au moins un moyen de détection apte à détecter et le cas échéant d'enregistrer au moins un message vocal et/ou un mouvement ou geste directionnel d'au moins un occupant du véhicule dans ladite zone de détection active et/ou, dans le cas d'une commande gestuelle, d'au moins un moyen d'acquisition d'images apte à capturer et à enregistrer une séquence d'images correspondant à la séquence gestuelle détectée par ledit moyen de détection.

Dans le cas d'une commande gestuelle, le moyen d'acquisition d'images est activé dès lors qu'un mouvement et/ou geste est détecté par le moyen de détection dans la zone de détection active afin d'éviter que le moyen d'acquisition d'images fonctionne de façon continue et consommatrice d'énergie. On pourra envisager que le dispositif de commande ne comporte pas de moyen de détection, étant entendu que ce moyen a une fonction de détection d'un geste initiateur d'une séquence de gestes à acquérir par la suite. Dans ce cas, une prise de vue est assurée de façon continue sur la zone de détection et les images acquises sont toutes traitées.

Dans le cas d'une commande par reconnaissance gestuelle, le module de détection et d'enregistrement de séquence gestuelle peut comporter une pluralité de moyens de d'acquisition d'images, orientés sur une ou plusieurs zone(s) de détection active(s), de manière à ce que l'ensemble des occupants du véhicule soient aptes à interagir individuellement avec le dispositif de commande à reconnaissance gestuelle.

L'habitacle du véhicule est, de préférence, équipé d'une pluralité de modules de détection et d'enregistrement de commande ciblés sur une pluralité de zones spécifiques de détection active de manière à ce que l'ensemble des occupants du véhicule soient aptes à interagir individuellement avec le dispositif de commande selon l'invention.

Le moyen de détection de commande vocale ou gestuelle peut être constitué de tout type de capteur et/ou caméra, apte à détecter au moins une séquence vocale ou un mouvement ou geste d'un occupant du véhicule dans une zone de détection active prédéfinie. A titre d'exemple non limitatif, le capteur peut être, dans le cas d'une commande vocale, un microphone apte à capter la voix humaine tout en réduisant le bruit ambiant pour bien entendre les commandes. Dans le cas d'une commande gestuelle, le capteur peut être un capteur infra-rouge et/ou ultrasons et/ou de type radar. Le moyen de détection pourra comporter une pluralité de capteurs de types différents, et tel ou tel capteur pourra être choisi en fonction d'une information reçue sur les conditions de luminosité par le module de commande.

Le moyen d'acquisition d'images du module détection et de capture de séquence gestuelle est constitué de tout moyen de prise de vues 2D ou 3D, source d'images et/ou de vidéos, ledit moyen étant apte à capturer, générer et enregistrer des séquences gestuelles fixes ou directionnelles 2D ou 3D exécutées dans une zone spécifique de détection active. A titre d'exemple non limitatif, le moyen de prise de vues consiste en une ou plusieurs caméra(s) et/ou appareil(s) photos. Par caméra on entend, par exemple, une caméra thermique et/ou une caméra pour la lumière visible et/ou une caméra infra-rouge pouvant fonctionner à tout niveau d'intensité lumineuse dans l'habitacle et/ou caméra laser et/ou un radar.

Dans le cas d'une commande gestuelle, les données acquises et générées par le module de détection et d'enregistrement de séquence gestuelle constituent des données représentatives définissant des formes géométriques mono, bi ou tridimensionnelle et/ou des données représentant au moins une position ou trajectoire de la partie du corps détectée dans une zone de détection active. On définit ainsi des « boîtes » dans lesquelles on repère la présence d'une partie du corps déterminée, et on analyse le déplacement de la succession de « boîtes » correspondant au déplacement de la partie du corps détecté.

Dans un mode de réalisation préféré de l'invention, l'habitacle du véhicule est équipé d'une pluralité de modules de détection distincts les uns des autres, tant par leur fonctionnement que par leur localisation et/ou orientation. Plus précisément, les modules de détection diffèrent les uns des autres dans la mesure où ils sont constitués de capteurs de nature technologique différente (micro, détecteur de mouvement, caméra...), aptes à détecter une pluralité de commandes de nature différente (vocale ou gestuelle). Lesdits modules de détection peuvent différer également les uns des autres par le fait qu'ils peuvent être fixes et/ou mobiles. Par module de détection fixe, on entend des capteurs et/ou caméras embarqués, intégrés de manière permanente dans l'habitacle. Par module de détection mobile, on entend des capteurs et/ou caméras intégrés dans un dispositif multimédia indépendant, par exemple un téléphone mobile, disposé et connecté dans l'habitacle par un occupant du véhicule. On comprend que lesdits modules de détection diffèrent les uns des autres par leur localisation dans le véhicule puisqu'ils sont intégrés dans des zones spécifiques distinctes de l'habitacle et ciblés sur des zones de détection active.

L'hétérogénéité des modules de détection a pour conséquence de diversifier les liaisons de communication entre les éléments du dispositif selon l'invention. On distinguera les technologies câblées associées aux éléments embarqués (communication filaire et/ou multiplexée, par exemple de type CAN/LIN) des technologies sans fil, dites « wireless » en anglais, associées aux éléments mobiles (par exemple communication Bluetooth).

Les données acquises et générées par la pluralité de modules de détection constituent des données représentatives d'au moins une séquence gestuelle et optionnellement vocale exécutée par au moins un occupant du véhicule, lesdites données représentatives sont transmises à l'unité de commande électronique ECU du dispositif de commande selon l'invention via un réseau de communication Wireless et/ou filaire et/ou multiplexé.

Selon une caractéristique avantageuse de l'invention, l'unité de commande électronique ECU du dispositif de commande d'éclairage intérieur est une unité centrale de traitement de données connectée, en amont, à une pluralité de modules de détection et d'enregistrement de commandes gestuelles et optionnellement vocales et, en aval, à une pluralité de modules d'éclairage intérieur.

Le principe de fonctionnement de l'unité de commande électronique du dispositif de commande selon l'invention est basé sur l'interdépendance existant entre une pluralité de séquences gestuelles et optionnellement vocales exécutées par au moins un occupant du véhicule, de préférence par un membre supérieur dudit occupant, détectées dans une pluralité de zones spécifiques de détection actives de l'habitacle et une pluralité de fonctions d'activation de l'éclairage de l'habitacle.

Selon ce principe de fonctionnement, l'unité de commande électronique ECU est configurée pour réaliser au moins l'une des étapes suivantes :
- recevoir une pluralité de données représentatives d'au moins une gestuelle et optionnellement vocale détectée et enregistrée par au moins un module de détection et - d'enregistrement de commande gestuelle et optionnellement vocale,
- traiter et analyser lesdites données représentatives relatives à la forme géométrique mono, bi ou tridimensionnelle et/ou à la position de la séquence gestuelle, et optionnellement relatives à la séquence vocale,
- agréger lesdites données représentatives d'une pluralité de séquences de commandes et provenant de sources hétérogènes, en vue d'obtenir des données représentatives fusionnées et synthétisées,
- comparer les données représentatives fusionnées à des séquences de référence stockées dans une base de données,
- déterminer si lesdites séquences enregistrées sont analogues à au moins une des séquences de référence et si cette similarité permet d'atteindre les conditions de déclenchement d'une fonction d'éclairage,
- arbitrer et prioriser les données en cas de commandes contradictoires et concomitantes exécutées par une pluralité d'occupants afin de privilégier, pour des raisons de sécurité, la commande exécutée par le conducteur,
- sélectionner, générer et transmettre, en sortie (aval), au moins une instruction d'activation à au moins un module d'éclairage, ladite instruction étant la plus appropriée à la sécurité du véhicule.

En vue d'obtenir l'activation d'au moins un module d'éclairage par commande gestuelle, un occupant du véhicule met en mouvement tout ou partie d'un de ses membres supérieurs et exécute, de manière volontaire et spécifique, une séquence gestuelle dans une zone spécifique de détection active de l'habitacle. Grâce à des étapes de détection, d'analyse, de comparaison et de commande propres au dispositif de commande selon l'invention, tout autre mouvement parasite reste sans effet sur l'activation des modules d'éclairage.

Selon une caractéristique avantageuse, l'unité de commande électronique ECU possède une capacité d'apprentissage de nouvelles séquences, lesquelles peuvent être enregistrées en vue d'alimenter la base de données en nouvelles séquences de référence.

Comme cela a pu être précisé précédemment, l'hétérogénéité des modules de détection et d'enregistrement a pour conséquence de diversifier les liaisons de communication entre les éléments du dispositif selon l'invention. On distinguera alors les moyens de communication amont des moyens de communication aval. Les moyens de communication amont sont configurés pour faire circuler des données représentatives d'au moins une commande d'éclairage intérieur générée et transmises par au moins un module de détection et d'enregistrement embarqué et/ou mobile vers l'entrée de l'unité de commande électronique ECU. Lesdits moyens de communication amont constituent un réseau de communication sans fil, de préférence de type Bluetooth, et/ou filaire et/ou multiplexé de préférence de type CAN. Les moyens de communication aval sont configurés pour faire circuler au moins une instruction en sortie de l'unité de commande électronique ECU vers au moins un module d'éclairage et constituent un réseau de communication multiplexé, de préférence de type CAN et/ou LIN.

Selon une caractéristique de l'invention, les moyens de communication amont et aval peuvent consister en un réseau multiplexé commun.

L'invention concerne également un procédé de commande à reconnaissance gestuelle et optionnellement vocale pour l'éclairage intérieur d'un véhicule automobile selon la revendication 12.

On pourra prévoir que l'étape de traitement comporte au moins l'une des étapes suivantes :
- une étape d'analyse desdites données relatives à la forme géométrique mono, bi ou tridimensionnelle et/ou à la position et/ou à la trajectoire de ladite séquence gestuelle, et optionnellement relatives à la séquence vocale,
- une étape de comparaison desdites données représentatives fusionnées relatives à ladite séquence gestuelle et optionnellement vocale enregistrée à au moins une séquence gestuelle et optionnellement vocale de référence stockée dans une base de données,
- une étape permettant de déterminer si des conditions de déclenchement d'une fonction d'éclairage sont atteintes.

Selon une caractéristique avantageuse, le procédé de commande peut comporter une étape d'apprentissage d'au moins une nouvelle séquence vocale et/ou gestuelle de référence. Cette étape d'apprentissage peut être réalisée selon un processus itératif au cours duquel l'utilisateur répète une même séquence vocale et/ou gestuelle afin que l'unité de commande électrique ECU puisse en faire la synthèse et générer un signal vocal moyen et/ou mouvement moyen définissant une nouvelle séquence vocale et/ou gestuelle de référence.

Par ailleurs et dans le cas d'une commande à reconnaissance gestuelle, on peut mettre en oeuvre dans l'étape d'analyse un moyen de détection de séquence gestuelle et un moyen d'acquisition d'images distincts et aptes à interagir l'un avec l'autre, ledit moyen d'acquisition d'images n'étant mis en oeuvre que lorsque le moyen de détection a détecté l'amorce d'un geste pouvant initier une séquence gestuelle.

Dans une alternative à ce dernier mode de réalisation, on peut prévoir de mettre en oeuvre dans l'étape d'analyse un moyen d'acquisition d'images qui récupère de façon continue des images ciblées sur la zone de détection.

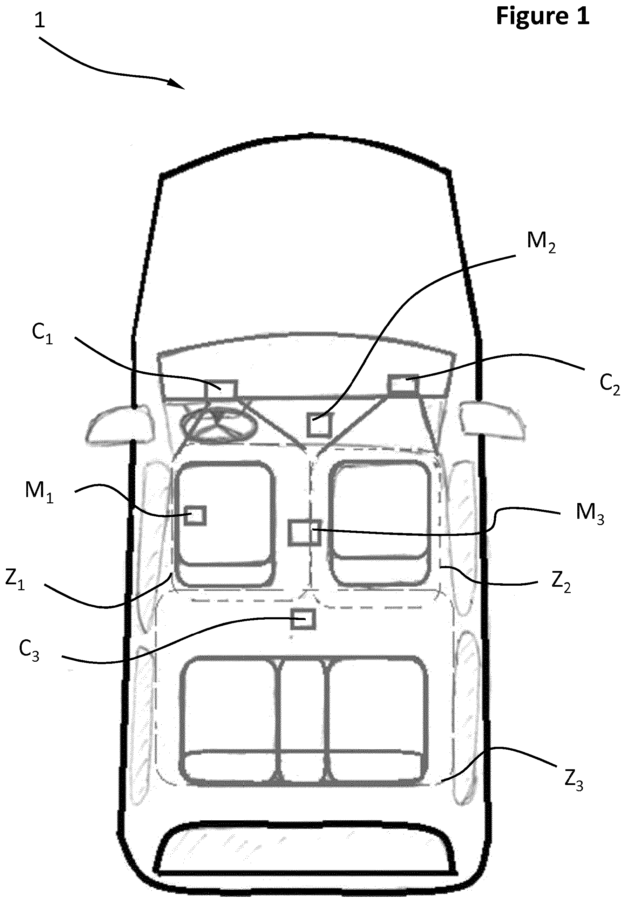

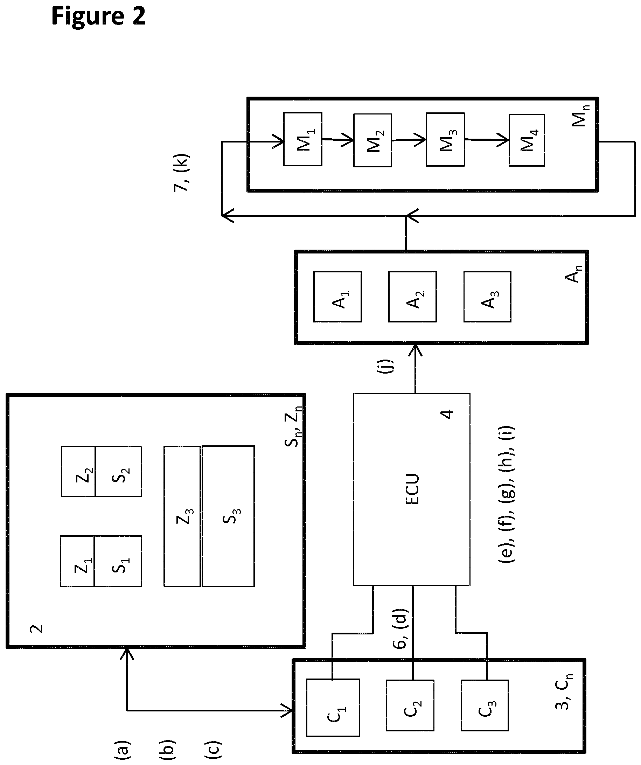

D'autres caractéristiques et avantages de l'invention apparaitront plus clairement à la lecture de la description détaillée d'un mode de réalisation de l'invention, donnée à titre d'exemple illustratif et non limitatif et s'appuyant sur les figures dans lesquelles on a illustré le dispositif de commande à reconnaissance gestuelle et optionnellement vocale pour l'éclairage intérieur d'un véhicule selon l'invention (figure 1) ainsi que le procédé associé (figure 2).

Un dispositif de commande 1 à reconnaissance gestuelle et optionnellement vocale pour l'éclairage intérieur d'un véhicule comporte une pluralité de sources lumineuses aptes à émettre chacune au moins un faisceau lumineux. Dans le cas décrit par la suite, ces sources lumineuses sont agencées dans une pluralité de modules d'éclairage Mₙ configurés pour assurer un éclairage fonctionnel et/ou un éclairage d'ambiance et/ou un éclairage pour la projection d'informations. Le dispositif comporte en outre des moyens de détection distincts Cₙ ciblés sur une pluralité de zones spécifiques Zₙ de l'habitacle. Lesdits moyens de détection Cₙ sont aptes à détecter une pluralité de commandes formées par des séquences déterminées Sₙ exécutées par au moins un occupant du véhicule dans au moins une zone spécifique Zₙ de l'habitacle, et notamment des séquences gestuelles et optionnellement vocales.

Les modules d'éclairage fonctionnel, par exemple de type liseuse, peuvent comporter au moins une diode électroluminescente LED formant source lumineuse logée, par exemple, dans le bloc plafonnier et/ou dans chacune des zones spécifiques Zₙ de l'habitacle.

Les modules d'éclairage d'ambiance peuvent être, par exemple, constitués d'une matrice de diodes électroluminescentes activables sélectivement, ladite matrice de diodes étant logée dans le bloc plafonnier.

Le module d'éclairage pour la projection d'informations peut être constitué d'un projecteur dont la source lumineuse est localisée, par exemple, dans le bloc plafonnier.

Le dispositif selon l'invention comporte également une unité de commande électronique ECU configurée pour répondre à une pluralité de données d'entrée représentatives des séquences Sₙ détectées, enregistrées et générées par la pluralité de capteurs Cₙ, identifier la situation en fonction de multiples variables détectées et sélectionner au moins une instruction Aₙ d'activation d'au moins un module d'éclairage intérieur Mₙ, laquelle doit être la plus appropriée à la sécurité du véhicule. L'unité de commande électronique ECU analyse des entrées multiples prédéterminées pour déterminer la fonction d'éclairage à commander.

L'unité de commande électronique ECU comporte, à minima, un processeur, des moyens de traitement et d'analyse de données, des moyens de calculs, une mémoire et un moyen de stockage de données. Le moyen de stockage de données comprend la base de données contenant les séquences gestuelles, et optionnellement vocales, de référence, les instructions d'activation des fonctions d'éclairage exécutables par le processeur et toute instruction de réception et de transmission de données.

La figure 1 illustre, à titre d'exemple, une configuration du dispositif selon l'invention dans laquelle trois zones spécifiques de l'habitacle sont définies : une zone conducteur Z₁, une zone passager avant Z₂, une zone passagers arrière Z₃. A chaque zone est associé au moins un module de détection de séquence gestuelle et optionnellement vocale C₁, C₂, C₃ constitué d'au moins un capteur, lequel peut être, par exemple, un microphone et/ou un détecteur de mouvement et/ou une caméras 1R et/ou une caméra de téléphone mobile et au moins un module d'éclairage intérieur M₁, M₂, M₃, lequel peut être, par exemple, une liseuse et/ou un bloc plafonnier et/ou une source LED RGB (Red Green Blue, en anglais) et/ou une matrice LED.

Dans le cas d'une commande vocale, l'acquisition des séquences vocales peut être réalisée par un module de détection, et le cas échéant d'enregistrement, de type microphone. Une pluralité de messages vocaux permet d'allumer, d'éteindre et/ou de modifier l'intensité lumineuse d'une pluralité de modules d'éclairage Mₙ associés à une pluralité de zones de détection Zₙ. Le signal vocal capté est ensuite numérisé à l'aide d'un convertisseur analogique-numérique.

Dans le cas d'une commande à reconnaissance gestuelle, le module de détection, et le cas échéant d'enregistrement, de séquence gestuelle peut être constitué d'un ou plusieurs moyen(s) de détection d'une séquence gestuelle et d'un ou plusieurs moyen(s) d'acquisition d'images. Ces éléments constitutifs du module de détection interagissent et communiquent entre eux de manière à détecter, capturer, enregistrer au moins une séquence gestuelle exécutée, dans une zone spécifique de détection active de l'habitacle, par au moins un occupant du véhicule.

Le ou les moyen(s) d'acquisition d'images peuvent être agencée(s) de façon indépendante des moyens de détection dans l'habitacle, étant entendu qu'au moins un moyen de détection et un moyen d'acquisition d'images sont configurés pour cibler la même partie de l'habitacle. On comprend que l'intérêt d'un découplage de ces deux moyens est de ne commander l'allumage des moyens d'acquisition d'images que lorsque les moyens de détection ont relevé le début d'un mouvement pouvant correspondre à une séquence gestuelle. On évite ainsi d'avoir des moyens d'acquisition d'images fonctionnant de manière continue. Toutefois, tel que cela a pu être précisé précédemment, on saurait n'utiliser qu'un seul dispositif combinant les moyens de détection et les moyens d'acquisition d'images.

Une séquence gestuelle est définie par une trajectoire verticale, horizontale et/ou diagonale exécutée dans une zone de détection active. La vitesse d'exécution de la séquence gestuelle peut également être prise en compte afin de distinguer un geste simple, séquence gestuelle dite fixe, d'un mouvement, séquence gestuelle dite directionnelle.

En fonction de la quantité de modules d'éclairage Mₙ à activer et de leur positionnement dans l'habitacle, de nombreuses combinaisons de gestes associées à des zones de détection Zₙ précises peuvent être crées de manière à constituer un langage gestuel fonctionnel ayant pour but d'allumer, d'éteindre et/ou de modifier l'intensité lumineuse d'un module d'éclairage Mₙ

L'ensemble de ces combinaisons vocales et/ou gestuelles constitue les séquences de référence sur la base desquelles l'unité de commande électronique ECU analysera et comparera les données représentatives des séquences vocales et/ou gestuelles exécutés par au moins un occupant. Ces séquences de référence sont, de préférence, apprises et reproduites par l'occupant dans le but d'activer et commander un module d'éclairage. L'acquisition et le stockage de toute nouvelle séquence de référence, mise au point par un occupant du véhicule, par le dispositif de commande à reconnaissance gestuelle et optionnellement vocale, en particulier par l'unité de commande électronique ECU, est également possible.

Le procédé de commande selon l'invention a été explicité précédemment, et on se référera à la figure 2 pour le détailler en d'autres termes. Le procédé de commande est basé sur l'interdépendance existant entre une pluralité de séquences Sₙ, une pluralité de zones de détection actives Zₙ et une pluralité de fonctions d'activation Aₙ de l'éclairage de l'habitacle ainsi que sur la connexion et la communication des éléments constitutifs du dispositif de commande 1 entre eux.

Le procédé comporte tout d'abord une étape de détection (a), dans au moins une zone de détection Z₁, Z₂, Z₃ de l'habitacle 2, d'une initiation d'au moins une séquence gestuelle et optionnellement vocale S₁, S₂, S₃ réalisée par au moins un occupant du véhicule, cette étape (a) étant réalisée par au moins un module de détection de commande gestuelle et optionnellement vocale C₁, C₂, C₃, Cette étape de détection (a) peut être suivie d'une étape de capture et d'enregistrement (b) de d'images 2D et/ou 3D desdites séquences gestuelles, et optionnellement de données vocales, réalisée par le module de détection C₁, C₂, C₃ et dans le cas d'une séquence gestuelle de préférence par au moins un moyen d'acquisition d'images.

On réalise ensuite une étape ultérieure de génération (c) de données représentatives de desdites séquences par le module de détection et de capture de séquence C₁, C₂, C₃. Dans le cas d'une commande gestuelle, lesdites données représentatives constituent des données définissant des formes géométriques mono, bi ou tridimensionnelle et/ou des données représentant au moins une position ou trajectoire dans une zone de détection active, par exemple un point ou nuage de points.

On procède alors à une communication entre le module de détection de séquences C₁ C₂, C₃ et l'unité de commande électronique ECU, par une étape de transmission (d) desdites données représentatives vers l'unité de commande électronique ECU, via un réseau de communication amont 6 sans fil (Bluetooth) et/ou filaire et/ou multiplexé (CAN). Cette communication génère ensuite différentes étapes successives, parmi lesquelles :
- une étape d'analyse (e) desdites données relatives à la forme géométrique mono, bi ou tridimensionnelle et/ou à la position et/ou à la trajectoire de ladite séquence gestuelle, et optionnellement relatives à la séquence vocale,
- une étape de fusion (f) desdites données relatives en vue d'obtenir des données représentatives fusionnées, étant entendu que la fusion de données peut consister à titre d'exemple en la prise en compte de séquences gestuelles opérées simultanément par plusieurs occupants du véhicule, ou bien en la prise en compte de plusieurs données émanant de moyens de détection différents, pour la détection d'un même geste d'un occupant ;
- une étape de comparaison (g) desdites données représentatives fusionnées relatives à ladite séquence gestuelle et optionnellement vocale enregistrée à au moins une séquence gestuelle et optionnellement vocale de référence stockée dans une base de données,
- une étape permettant de déterminer (h) si les conditions de déclenchement d'une fonction d'éclairage sont atteintes,
- une étape de priorisation (i) des données représentatives fusionnées en cas de commandes contradictoires et concomitantes exécutées par une pluralité d'occupants afin de privilégier, pour des raisons de sécurité, la commande exécutée par le conducteur,
- si les conditions de déclenchement sont atteintes, on peut prévoir simultanément, ou avec un léger décalage temporel, une étape de transmission (j) et d'exécution (k), via un réseau de communication multiplexé 7 aval (CAN/LlN), d'au moins une instruction A₁, A₂, A₃ d'allumage et/ou d'extinction et/ou de variation de l'intensité lumineuse d'un faisceau lumineux émis dans l'habitacle 2 par au moins un module d'éclairage intérieur M₁, M₂, M₃, M₄ intégré du véhicule , tels que, par exemple, une liseuse, un bloc plafonnier, une LED RGB, une matrice LED.

En outre, le procédé de commande peut comporter une étape d'apprentissage (k) d'au moins une nouvelle séquence de référence. Ainsi, on sait adapter le dispositif de commande à reconnaissance gestuelle et optionnellement vocale et le procédé de commande associé des nouvelles fonctionnalités du dispositif d'éclairage intérieur, en adaptant la base de données de l'unité de commande électronique.

## Revendications

1. Dispositif de commande (1) à reconnaissance gestuelle et optionnellement vocale pour l'éclairage intérieur d'un véhicule automobile comprenant au moins deux modules d'éclairage intérieur (Mₙ), chacun comprenant au moins une source lumineuse configurée pour émettre au moins un faisceau lumineux dans un habitacle (2) du véhicule, comportant au moins des moyens distincts de détection (3, Cₙ) d'une pluralité de commandes (Sₙ) pouvant être exécutées par une pluralité d occupants, dont un conducteur, dans des zones spécifiques (Zₙ) de l'habitacle (2), **caractérisé en ce que** lesdits moyens de détection (3, Cₙ) sont configurés pour transmettre des données représentatives desdites commandes (Sₙ) à au moins des moyens de traitements et d'analyse (4, ECU) configurés pour fusionner et prioriser lesdites données et générer, après comparaison avec des données de référence, au moins une instruction (Aₙ) à au moins un module d'éclairage intérieur (Mₙ), et en cas de commandes contradictoires et concomitantes exécutées par la pluralité d'occupants, dont le conducteur, dans les zones spécifiques (Zn), on exécute une étape de priorisation (i) des données représentatives fusionnées afin de privilégier, pour des raisons de sécurité, la commande exécutée dans la zone spécifique (Z₁) du conducteur, et **en ce que** lesdites commandes sont une pluralité de commandes gestuelles, exécutées par au moins un occupant du véhicule dans une des zones spécifiques (Zₙ) de l'habitacle (2) ciblées par lesdits moyens de détection.

2. Dispositif selon la revendication 1, **caractérisé en ce que** les moyens de détection (3, Cₙ) sont configurés pour détecter aussi une pluralité de commandes vocales, exécutées par au moins un occupant du véhicule dans une des zones spécifiques (Zₙ) de l'habitacle (2) ciblées par lesdits moyens de détection.

3. Dispositif selon la revendication 1 ou 2, **caractérisé en ce que** les commandes gestuelles sont constituées d'une pluralité de gestes formant une séquence gestuelle déterminée.

4. Dispositif selon la revendication précédente, **caractérisé en ce que** la séquence gestuelle est définie par son orientation verticale et/ou horizontale et/ou diagonale et sa vitesse d'exécution.

5. Dispositif selon l'une des revendications précédentes, **caractérisé en ce que** les moyens de détection (3, Cₙ) comportent des moyens d'acquisition, depuis un réseau, de données transportant lesdites commandes (Sₙ),

6. Dispositif selon l'une quelconque des revendications 1 à 5, **caractérisé en ce que** lesdits moyens de détection (3) sont constitués d'une pluralité de modules de détection (Cₙ) de commandes distincts, configurés pour au moins détecter une commande d'éclairage intérieur, analyser cette commande, et transmettre des données représentatives de ladite commande, **en ce que** les moyens de traitements et d'analyse (4) sont formés par
- une unité de commande électronique (ECU) reliée auxdits modules de détection (Cₙ) et configurée pour traiter la pluralité de données représentatives d'une pluralité de commandes, et transmettre ladite au moins une instruction (Aₙ) résultante à au moins un module d'éclairage (Mₙ), et **en ce que** le dispositif comporte au moins :
- des moyens de communication amont (6) configurés pour faire circuler des données représentatives transmises par au moins un module de détection (Cₙ) vers l'entrée de l'unité de commande électronique (ECU),
- des moyens de communication aval (7) configurés pour faire circuler au moins une instruction (Aₙ) en sortie de l'unité de commande électronique (ECU) vers au moins une source lumineuse et constituant un réseau multiplexé.

7. Dispositif selon la revendication précédente, **caractérisé en ce que** les modules de détection (Cₙ) sont configurés pour enregistrer une pluralité de commandes dont la séquence de réalisation forme ladite commande d'éclairage intérieur.

8. Dispositif selon la revendication 6ou 7, **caractérisé en ce que** l'unité de commande électronique (ECU) est configurée pour fusionner et synthétiser les données représentatives d'une pluralité de commandes en une ou plusieurs instructions (Aₙ) résultantes.

9. Dispositif selon la revendication précédente, **caractérisé en ce que** l'unité de commande électronique (ECU) est configurée pour prioriser les données en provenance des différents modules de détection (Cₙ), et pour établir une ou plusieurs instructions (Aₙ) résultantes sur la base d'une sélection des données en provenance des différents modules de détection.

10. Dispositif selon l'une des revendications 6 à 9, **caractérisé en ce que** l'unité de commande électronique (ECU) est configurée pour comparer les données représentatives d'une pluralité de commandes avec des données de référence et déterminer en fonction de cette comparaison si les conditions de déclenchement d'une fonction d'éclairage sont atteintes.

11. Dispositif selon l'une des revendications 6 à 10, **caractérisé en ce que** les moyens de communication amont (6) et aval (7) consiste en un réseau multiplexé commun.

12. Procédé de commande à reconnaissance gestuelle et optionnellement vocale pour l'éclairage intérieur d'un véhicule automobile, ledit véhicule comprenant au moins deux modules d'éclairage (Mn) avec chacun au moins une source lumineuse apte à émettre au moins un faisceau lumineux dans l'habitacle (2) du véhicule, **caractérisé en ce qu'**on procède successivement, suite à une pluralité de commandes (Sₙ) d'une pluralité d'occupants, dont un conducteur, dans des zones spécifiques de détection (Zₙ) de l'habitacle (2), à :
- une étape de détection (a) d'images bidimensionnelles 2D et/ou tridimensionnelles 3D d'une séquence gestuelle, et optionnellement d'une séquence vocale,
- une étape d'analyse (c) des images, et optionnellement du signal vocal, pour générer des données représentatives des commandes (Sₙ),
- une étape de transmission (d) desdites données représentatives à au moins une unité de commande électronique (ECU), via un réseau de communication (6),
- une étape de traitement (e, f, g, h, i) desdites données représentatives des commandes (Sₙ),
- une étape de transmission (j), si des conditions de déclenchement sont atteintes, via un réseau de communication multiplexé (7), d'au moins une instruction (Aₙ) de commande d'au moins un module d'éclairage (Mₙ) du véhicule, ladite étape de traitement comportant une étape de fusion (f) desdites données représentatives en vue d'obtenir des données représentatives fusionnées et une étape de priorisation (i) des données représentatives fusionnées en cas de commandes contradictoires et concomitantes exécutées par la pluralité d'occupants, dont le conducteur, dans les zones spécifiques (Zn), afin de privilégier, pour des raisons de sécurité, la commande exécutée dans la zone spécifique (Z₁) du conducteur, et lesdites commandes sont au moins une pluralité de commandes gestuelles exécutées par au moins un occupant du véhicule dans une des zones spécifiques (Zₙ) de l'habitacle (2).

13. Procédé de commande selon la revendication précédente, **caractérisé en ce que** ladite étape de traitement comporte au moins une étape parmi les suivantes :
- une étape de comparaison (g) desdites données représentatives fusionnées relatives à ladite séquence gestuelle et optionnellement vocale détectée à au moins une séquence gestuelle et optionnellement vocale de référence stockée dans une base de données,
- une étape permettant de déterminer (h) si des conditions de déclenchement d'une fonction d'éclairage sont atteintes

14. Procédé de commande selon l'une des revendications 12 à 13, **caractérisé en ce que**, dans le cas d'une commande par reconnaissance gestuelle, l'on met en oeuvre dans l'étape d'analyse (c) un moyen de détection de séquence gestuelle et un moyen d'acquisition d'images distincts et aptes à interagir l'un avec l'autre, ledit moyen d'acquisition d'images n'étant mis en oeuvre que lorsque le moyen de détection a détecté l'amorce d'un geste pouvant initier une séquence gestuelle,

15. Procédé de commande selon la revendication précédente, **caractérisé en ce que**, dans le cas d'une commande par reconnaissance gestuelle, l'on met en oeuvre dans l'étape d'analyse (c) un moyen d'acquisition d'images qui récupère de façon continue des images ciblées sur la zone de détection (Zₙ).

## Patentansprüche

1. Vorrichtung zur Steuerung (1) der Innenbeleuchtung eines Kraftfahrzeugs über Gestenerkennung und optional Spracherkennung, die wenigstens zwei Innenbeleuchtungsmodule (Mₙ) umfasst, wobei jedes wenigstens eine Lichtquelle umfasst, die dazu ausgebildet ist, wenigstens ein Lichtbündel in einen Innenraum (2) des Fahrzeugs auszusenden, aufweisend wenigstens gesonderte Mittel zur Detektion (3, Cₙ) einer Mehrzahl von Steuerungen (Sₙ), die von einer Mehrzahl von Insassen, darunter einem Fahrer, in spezifischen Bereichen (Zₙ) des Innenraums (2) ausgeführt werden können, **dadurch gekennzeichnet, dass** die Detektionsmittel (3, Cₙ) dazu ausgebildet sind, Daten, die für die Steuerungen (Sₙ) repräsentativ sind, wenigstens an Verarbeitungs- und Analysemittel (4, ECU) zu übertragen, die dazu ausgebildet sind, die Daten zusammenzuführen und zu priorisieren, und nach Vergleich mit Referenzdaten wenigstens eine Anweisung (Aₙ) an wenigstens ein Innenbeleuchtungsmodul (Mₙ) zu erzeugen, und im Falle von widersprüchlichen und zeitgleichen Steuerungen, die von der Mehrzahl von Insassen, darunter dem Fahrer, in den spezifischen Bereichen (Zn) ausgeführt werden, ein Schritt des Priorisierens (i) der zusammengeführten repräsentativen Daten ausgeführt wird, um aus Sicherheitsgründen die Steuerung zu privilegieren, die im spezifischen Bereich (Z₁) des Fahrers ausgeführt wird, und dadurch, dass die Steuerungen eine Mehrzahl von Gestensteuerungen sind, die von wenigstens einem Insassen des Fahrzeugs in einem der spezifischen Bereiche (Zₙ) des Innenraums (2) ausgeführt werden, die Ziel der Detektionsmittel sind.

2. Vorrichtung nach Anspruch 1, **dadurch gekennzeichnet, dass** die Detektionsmittel (3, Cₙ) dazu ausgebildet sind, auch eine Mehrzahl von Sprachsteuerungen zu detektieren, die von wenigstens einem Insassen des Fahrzeugs in einem der spezifischen Bereiche (Zₙ) des Innenraums (2) ausgeführt werden, die Ziel der Detektionsmittel sind.

3. Vorrichtung nach Anspruch 1 oder 2, **dadurch gekennzeichnet, dass** die Gestensteuerungen von einer Mehrzahl von Gesten gebildet sind, die eine bestimmte Gestenfolge bilden.

4. Vorrichtung nach dem vorhergehenden Anspruch, **dadurch gekennzeichnet, dass** die Gestenfolge durch ihre vertikale und/oder horizontale und/oder diagonale Orientierung und ihre Ausführungsgeschwindigkeit festgelegt ist.

5. Vorrichtung nach einem der vorhergehenden Ansprüche, **dadurch gekennzeichnet, dass** die Detektionsmittel (3, Cₙ) Mittel zur Erfassung von Daten, die die Steuerungen (Sₙ) transportieren, aus einem Netzwerk aufweisen.

6. Vorrichtung nach einem der Ansprüche 1 bis 5, **dadurch gekennzeichnet, dass** die Detektionsmittel (3) von einer Mehrzahl von gesonderten Steuerungsdetektionsmodulen (Cₙ) gebildet sind, die dazu ausgebildet sind, wenigstens eine Innenbeleuchtungssteuerung zu erfassen, diese Steuerung zu analysieren und Daten, die für diese Steuerung repräsentativ sind, zu übertragen, dadurch, dass die Verarbeitungs- und Analysemittel (4) von einer elektronischen Steuereinheit (ECU) gebildet sind, die mit den Detektionsmodulen (Cₙ) verbunden ist und dazu ausgebildet ist, die Mehrzahl von Daten, die für eine Mehrzahl von Steuerungen repräsentativ sind, zu verarbeiten, und die wenigstens eine resultierende Anweisung (Aₙ) an wenigstens ein Beleuchtungsmodul (Mₙ) zu übertragen, und dadurch, dass die Vorrichtung wenigstens Folgendes aufweist:
- stromaufwärtige Kommunikationsmittel (6), die dazu ausgebildet sind, repräsentative Daten, die von wenigstens einem Detektionsmodul (Cₙ) übertragen werden, zum Eingang der elektronischen Steuereinheit (ECU) fließen zu lassen,
- stromabwärtige Kommunikationsmittel (7), die dazu ausgebildet sind, wenigstens eine Anweisung (Aₙ) am Ausgang der elektronischen Steuereinheit (ECU) zu wenigstens einer Lichtquelle fließen zu lassen, und ein Multiplexnetzwerk bilden.

7. Vorrichtung nach dem vorhergehenden Anspruch, **dadurch gekennzeichnet, dass** die Detektionsmodule (Cₙ) dazu ausgebildet sind, eine Mehrzahl von Steuerungen abzuspeichern, deren Ausführungsfolge die Innenbeleuchtungssteuerung bildet.

8. Vorrichtung nach Anspruch 6 oder 7, **dadurch gekennzeichnet, dass** die elektronische Steuereinheit (ECU) dazu ausgebildet ist, die Daten, die für eine Mehrzahl von Steuerungen repräsentativ sind, zu einer oder mehreren resultierenden Anweisungen (Aₙ) zusammenzuführen und zusammenzufassen.

9. Vorrichtung nach dem vorhergehenden Anspruch, **dadurch gekennzeichnet, dass** die elektronische Steuereinheit (ECU) dazu ausgebildet ist, die Daten von den verschiedenen Detektionsmodulen (Cₙ) zu priorisieren und eine oder mehrere resultierende Anweisungen (Aₙ) auf der Grundlage einer Auswahl der Daten von den verschiedenen Detektionsmodulen zu erstellen.

10. Vorrichtung nach einem der Ansprüche 6 bis 9, **dadurch gekennzeichnet, dass** die elektronische Steuereinheit (ECU) dazu ausgebildet ist, die Daten, die für eine Mehrzahl von Steuerungen repräsentativ sind, mit Referenzdaten zu vergleichen und in Abhängigkeit von diesem Vergleich zu bestimmen, ob die Bedingungen zur Auslösung einer Beleuchtungsfunktion erfüllt sind.

11. Vorrichtung nach einem der Ansprüche 6 bis 10, **dadurch gekennzeichnet, dass** die stromaufwärtigen (6) und stromabwärtigen (7) Kommunikationsmittel aus einem gemeinsamen Multiplexnetzwerk bestehen.

12. Verfahren zur Steuerung der Innenbeleuchtung eines Kraftfahrzeugs über Gestenerkennung und optional Spracherkennung, wobei das Fahrzeug wenigstens zwei Beleuchtungsmodule (Mn) mit jeweils wenigstens einer Lichtquelle umfasst, die geeignet ist wenigstens ein Lichtbündel in den Innenraum (2) des Fahrzeugs auszusenden, **dadurch gekennzeichnet, dass** nach einer Mehrzahl von Steuerungen (Sₙ) von einer Mehrzahl von Insassen, darunter einem Fahrer, in spezifischen Detektionsbereichen (Zₙ) des Innenraums (2) Folgendes vorgenommen wird:
- ein Schritt des Detektierens (a) zweidimensionaler 2D-Bilder und/oder dreidimensionaler 3D-Bilder einer Gestenfolge und optional einer Sprachfolge,
- ein Schritt des Analysierens (c) der Bilder und optional des Sprachsignals, um Daten zu erzeugen, die für die Steuerungen (Sₙ) repräsentativ sind,
- ein Schritt des Übertragens (d) der repräsentativen Daten an wenigstens eine elektronische Steuereinheit (ECU) über ein Kommunikationsnetzwerk (6),
- ein Schritt des Verarbeitens (e, f, g, h, i) der Daten, die für die Steuerungen (Sₙ) repräsentativ sind,
- wenn Auslösebedingungen erfüllt sind, ein Schritt des Übertragens (j) wenigstens einer Anweisung (Aₙ) zur Steuerung wenigstens eines Beleuchtungsmoduls (Mₙ) des Fahrzeugs über ein Multiplex-Kommunikationsnetzwerk (7), wobei der Schritt des Verarbeitens einen Schritt des Zusammenführens (f) der repräsentativen Daten zur Gewinnung zusammengeführter repräsentativer Daten und einen Schritt des Priorisierens (i) der zusammengeführten repräsentativen Daten im Falle von widersprüchlichen und zeitgleichen Steuerungen aufweist, die von der Mehrzahl von Insassen, darunter dem Fahrer, in den spezifischen Bereichen (Zn) ausgeführt werden, um aus Sicherheitsgründen die Steuerung zu privilegieren, die im spezifischen Bereich (Z₁) des Fahrers ausgeführt wird, und die Steuerungen wenigstens eine Mehrzahl von Gestensteuerungen sind, die von wenigstens einem Insassen des Fahrzeugs in einem der spezifischen Bereiche (Zₙ) des Innenraums (2) ausgeführt werden.

13. Steuerungsverfahren nach dem vorhergehenden Anspruch, **dadurch gekennzeichnet, dass** der Schritt des Verarbeitens wenigstens einen Schritt der folgenden aufweist:
- einen Schritt des Vergleichens (g) der zusammengeführten repräsentativen Daten in Bezug auf die detektierte Gestenfolge und optional Sprachfolge mit wenigstens einer Referenz-Gestenfolge und optional - Sprachfolge, die in einer Datenbank gespeichert ist,
- einen Schritt, der es ermöglicht, zu bestimmen (h), ob Auslösebedingungen einer Beleuchtungsfunktion erfüllt sind.

14. Steuerungsverfahren nach einem der Ansprüche 12 bis 13, **dadurch gekennzeichnet, dass** im Falle einer Steuerung durch Gestenerkennung im Schritt des Analysierens (c) ein Mittel zur Detektion von Gestenfolgen und ein Mittel zur Erfassung von Bildern verwendet werden, die gesondert und dafür geeignet sind, miteinander zu interagieren, wobei das Bilderfassungsmittel nur dann verwendet wird, wenn das Detektionsmittel den Beginn einer Geste detektiert hat, die eine Gestenfolge einleiten kann.

15. Steuerungsverfahren nach dem vorhergehenden Anspruch, **dadurch gekennzeichnet, dass** im Falle einer Steuerung durch Gestenerkennung im Schritt des Analysierens (c) ein Bilderfassungsmittel verwendet wird, das fortlaufend Bilder mit dem Detektionsbereich (Zₙ) als Ziel erfasst.

## Claims

1. Control device (1) with gesture recognition and optionally voice recognition for controlling the interior lighting of a motor vehicle comprising at least two interior lighting modules (Mₙ), each comprising at least one light source configured to emit at least one light beam in an interior (2) of the vehicle, comprising at least distinct means (3, Cₙ) for detecting a plurality of commands (Sₙ) that can be executed by a plurality of occupants, including a driver, in specific zones (Zₙ) of the vehicle interior (2), **characterized in that** said detection means (3, Cₙ) are configured to transmit data representative of said commands (Sₙ) to at least processing and analysis means (4, ECU) configured to merge and prioritize said data and generate, after comparison with reference data, at least one instruction (Aₙ) to at least one interior lighting module (Mₙ), and, in the case of contradictory and concomitant commands executed by the plurality of occupants, including the driver, in the specific zones (Zn), a step of prioritization (i) of the merged representative data is executed in order to prioritize, for safety reasons, the command executed in the specific zone (Z₁) of the driver, and **in that** said commands are a plurality of gesture commands, executed by at least one occupant of the vehicle in one of the specific zones (Zₙ) of the vehicle interior (2) targeted by said detection means.

2. Device according to Claim 1, **characterized in that** the detection means (3, Cₙ) are configured to detect also a plurality of voice commands, executed by at least one occupant of the vehicle in one of the specific zones (Zₙ) of the vehicle interior (2) targeted by said detection means.

3. Device according to Claim 1 or 2, **characterized in that** the gesture commands are composed of a plurality of gestures forming a determined gesture sequence.

4. Device according to the preceding claim, **characterized in that** the gesture sequence is defined by its vertical and/or horizontal and/or diagonal orientation and its speed of execution.

5. Device according to one of the preceding claims, **characterized in that** the detection means (3, Cₙ) comprise acquisition means for acquiring, from a network, data conveying said commands (Sₙ).

6. Device according to any one of Claims 1 to 5, **characterized in that** said detection means (3) are composed of a plurality of distinct command detection modules (Cₙ), configured to at least detect an interior lighting command, analyze this command, and transmit data representative of said command, **in that** the processing and analysis means (4) are formed by an electronic control unit (ECU) linked to said detection modules (Cₙ) and configured to process the plurality of data representative of a plurality of commands, and transmit said at least one resulting instruction (Aₙ) to at least one lighting module (Mₙ), and **in that** the device comprises at least:
- upstream communication means (6) configured to circulate representative data transmitted by at least one detection module (Cₙ) to the input of the electronic control unit (ECU),
- downstream communication means (7) configured to circulate at least one instruction (Aₙ) at the output of the electronic control unit (ECU) to at least one light source and constituting a multiplexed network.

7. Device according to the preceding claim, **characterized in that** the detection modules (Cₙ) are configured to store a plurality of commands of which the performance sequence forms said interior lighting command.

8. Device according to Claim 6 or 7, **characterized in that** the electronic control unit (ECU) is configured to merge and synthesize the data representative of a plurality of commands into one or more resulting instructions (Aₙ).

9. Device according to the preceding claim, **characterized in that** the electronic control unit (ECU) is configured to prioritize the data originating from the various detection modules (Cₙ) and to establish one or more resulting instructions (Aₙ) on the basis of a selection of data originating from the various detection modules.

10. Device according to one of Claims 6 to 9, **characterized in that** the electronic control unit (ECU) is configured to compare the data representative of a plurality of commands with reference data and determine, as a function of this comparison, whether the conditions for triggering a lighting function are met.

11. Device according to one of Claims 6 to 10, **characterized in that** the upstream (6) and downstream (7) communication means consist of a common multiplexed network.

12. Control method with gesture recognition and optionally voice recognition for controlling the interior lighting of a motor vehicle, said vehicle comprising at least two lighting modules (Mn) each with at least one light source capable of emitting at least one light beam in the interior (2) of the vehicle,
**characterized in that** following a plurality of commands (Sₙ) from a plurality of occupants, including a driver, in specific detection zones (Zₙ) of the vehicle interior (2), the following steps are carried out in succession:
- a step of detection (a) of two-dimensional 2D and/or three-dimensional 3D images of a gesture sequence, and optionally of a voice sequence,
- a step of analysis (c) of the images, and optionally of the voice signal, to generate data representative of the commands (Sₙ),
- a step of transmission (d) of said representative data to at least one electronic control unit (ECU), via a communication network (6),
- a step of processing (e, f, g, h, i) of said data representative of the commands (Sₙ),
- a step of transmission (j), if triggering conditions are met, via a multiplexed communication network (7), of at least one controlling instruction (Aₙ) controlling at least one lighting module (Mₙ) of the vehicle,
said processing step comprising a step of merging (f) of said representative data in order to obtain merged representative data and a step of prioritization (i) of the merged representative data in case of contradictory and concomitant commands executed by the plurality of occupants, including the driver, in the specific zones (Zn), in order to prioritize, for safety reasons, the command executed in the specific zone (Z₁) of the driver, and said commands are at least a plurality of gesture commands executed by at least one occupant of the vehicle in one of the specific zones (Zₙ) of the vehicle interior (2) .

13. Control method according to the preceding claim, **characterized in that** said processing step comprises at least one step out of the following:
- a step of comparison (g) of said merged representative data relating to said detected gesture and optionally voice sequence to at least one reference gesture and optionally voice sequence stored in a database,
- a step making it possible to determine (h) whether conditions for triggering a lighting function are met.

14. Control method according to one of Claims 12 and 13, **characterized in that**, in the case of a gesture recognition command, there is implemented, in the analysis step (c), a gesture sequence detection means and an image acquisition means that are distinct and capable of interacting with one another, said image acquisition means being implemented only when the detection means has detected the beginning of a gesture that can initiate a gesture sequence.

15. Control method according to the preceding claim, **characterized in that**, in the case of a gesture recognition command, there is implemented, in the analysis step (c), an image acquisition means which continually recovers images targeted on the detection zone (Zₙ) .
